# EUROPÄISCHE PATENTANMELDUNG

(11) **EP 4 523 833 A1**
(43) Veröffentlichungstag der Anmeldung: **19.03.2025**
(21) Anmeldenummer: 24186215.0
(22) Anmeldetag: 03.07.2024
(51) Int. Cl.: B23K 26/03, B23K 26/244, B23K 103/10

(54) **REMOTE-LASERSCHWEISSVERFAHREN UND LASERBEARBEITUNGSANLAGE ZUR HERSTELLUNG MEDIENDICHTER SCHWEISSVERBINDUNGEN AN ÜBERLAPPSTÖSSEN; VERFAHREN ZUR HERSTELLUNG EINES MEDIENDICHTEN BAUTEILS, UND MEDIENDICHTES BAUTEIL**

(30) Priorität: 20.07.2023 DE 102023119244
(71) Anmelder: Scansonic MI GmbH, 12681 Berlin (DE)
(72) Erfinder: Jasiewicz, Filip, 12681 Berlin (DE); Amelung, Max, 12681 Berlin (DE)
(74) Vertreter: Werner, André

(57) **Zusammenfassung**

Die Erfindung betrifft ein Remote-Laserschweißverfahren zur Herstellung mediendichter Schweißverbindungen an Überlappstößen, durch dessen Anwendung die Entstehung von Undichtigkeiten, die durch Endkraterfehlerstellen verursacht werden, vermieden werden kann. Hierzu wird eine Auslaufnaht (4) innerhalb eines Abschnitts einer zuvor gefertigten Verbindungs-Einschweißnaht (3) erzeugt. Beschrieben sind ferner eine Laserbearbeitungsanlage zur Durchführung des Verfahrens, ein Verfahren zur Herstellung eines mediendichten Bauteils unter Einsatz des Remote-Laserschweißverfahrens sowie ein mit diesem Verfahren hergestelltes, mediendichtes Bauteil. Die Technologie eignet sich insbesondere zur Herstellung von medienkapselnden oder medienführenden Komponenten, die im Bereich der Elektromobilität eingesetzt werden.

## Beschreibung

Die Erfindung betrifft ein Remote-Laserschweißverfahren zur Herstellung mediendichter Schweißverbindungen an Überlappstößen, eine Laserbearbeitungsanlage zur Durchführung des Verfahrens, ein Verfahren zur Herstellung eines mediendichten Bauteils unter Einsatz des Remote-Laserschweißverfahrens sowie ein mit diesem Verfahren hergestelltes, mediendichtes Bauteil. Die Technologie eignet sich insbesondere zur Herstellung von medienkapselnden oder medienführenden Komponenten, die im Bereich der Elektromobilität eingesetzt werden.

Beim Bau von Komponenten für die automobile Elektromobilität, wie zum Beispiel Batterieflächenkühler oder Batteriezellen, erfolgt das Zusammenfügen der Bauteile aus Einzelbauelementen unter anderem durch Laserstrahlschweißen. Die Schweißverbindungen werden hierbei überwiegend an Überlappstößen erzeugt, wobei I-Nähte die vorherrschende Nahtform bilden. Schweißtechnisch wird bei Verbindung von Ober- und Unterblech eines Überlappstoßes zwischen einer Einschweißung und einer Durchschweißung unterschieden. Während die Schweißnaht bei einer Durchschweißung sowohl Ober- als auch Unterblech durchdringt, endet die Schweißnaht bei einer Einschweißung im Unterblech. Beim Fügeprozess von Komponenten für Elektrofahrzeuge mittels Laserstrahlschweißens werden Einschweißungen bevorzugt, da Durchschweißungen aufgrund der Beschädigungs- bzw. Explosionsgefahr von Batterien oft nicht zulässig sind.

Viele der Komponenten für Elektrofahrzeuge dienen zum Führen flüssiger oder gasförmiger Medien, wie zum Beispiel von Kühlwasser, oder kapseln die Komponenten gegen Austritt flüssiger oder gasförmiger Medien, zum Beispiel gegen den Austritt von Batteriefluiden. Solche Komponenten sind daher regelmäßig mediendicht auszuführen, eine Anforderung, die folglich und insbesondere für die Fügeverbindungen, d. h. zum Beispiel für die Schweißnähte, gilt. Die Verbindungsschweißnähte sind daher so herzustellen, dass sie frei von durchgehenden Hohlräumen oder Rissen sind.

Aufgrund von Gewichtsoptimierungen werden für die Komponenten im Bereich der Elektromobilität häufig Aluminiumwerkstoffe eingesetzt. Zumeist handelt es sich hierbei um Reinaluminium (Legierungsgruppe 1XXX), Aluminium-Mangan-Legierungen (Legierungsgruppe 3XXX), Aluminium-Magnesium-Legierungen (Legierungsgruppe 5XXX) oder Aluminium-Magnesium-Silicium-Legierungen (Legierungsgruppe 6XXX). Letztere beide Gruppen zählen zu den heißrissanfälligen Alum inium-Legierungen.

Neben der Heißrissanfälligkeit bestimmter Legierungen ist - mit Blick auf die Nahtdichtigkeit - beim Laserstrahlschweißen die Bildung von Hohlräumen zu vermeiden, die sich prozessbedingt beim Abschalten des Laserstrahls am Nahtende bilden können. Während des Laserstrahlschweißprozesses kommt es verfahrensbedingt zur Ausbildung einer sogenannten Schmelzkapillare (engl. keyhole). Wird der Laserstrahl schlagartig abgeschaltet, erstarrt der Werkstoff und die Schmelzkapillare hinterlässt am Nahtende einen Hohlraum, den sogenannten Endkrater. Der Endkraterbereich ist zudem anfällig für die Bildung von Rissen im Schweißgut, den sogenannten Endkraterrissen.

Für eine wirtschaftliche Fertigung der beschriebenen Komponenten aus dem Bereich der Elektromobilität eignet sich insbesondere das Verfahren des Remote-Laserschweißens, bei dem der Laserstrahl während des Schweißens mittels einer schnelloperierenden Scanner-Optik abgelenkt bzw. geführt wird. Das Remote-Laserschweißen ermöglicht eine hohe Produktivität in Verbindung mit hoher Schweißnahtqualität. Um die Vorteile des Remote-Laserschweißens auszuschöpfen, wird das Remote-Laserschweißen im Regelfall ohne Schweißzusatzwerkstoff durchgeführt.

Zur Reduzierung der Endkrater- und/oder Rissbildung am Nahtende, die durch Verwendung von überlegierten Schweißzusatzwerkstoffen grundsätzlich zwar möglich, aus wirtschaftlichen Gründen aber nicht zweckmäßig wäre, ist es beim Remote-Laserschweißen erforderlich, die Leistung, mit der ein spezifisches Materialvolumen durch den Laser beaufschlagt wird, zum Nahtende hin langsam zurückzufahren, zum Beispiel durch sukzessives Absenken der Laserleistung, Defokussierung des Lasers oder Modifikation der Laserstrahlgeschwindigkeit. Durch diese Methoden kann die Endkraterbildung vielfach unterdrückt, jedoch nicht völlig ausgeschlossen werden.

DE 10 2022 100 186 A1 offenbart ein Verfahren zum Laserschweißen einer Bipolarplatte für eine Brennstoffzelle, wobei das Laserschweißen mit wenigstens zwei Überfahrten der Schweißnaht erfolgt, und wobei mit einer jeweiligen Überfahrt eine Teilschweißnaht erzeugt wird. Hierdurch wird eine bessere Fluiddichtigkeit von Schweißnähten einer Bipolarplatte für Brennstoffzellen ermöglicht. Aus DE 11 2005 002 776 B4 bekannte Werkstoffe für Bipolarplatten sind beispielsweise Aluminium, Magnesium, Platin, rostfreier Stahl, Titan, eine Metalllegierung und Mischungen daraus.

Aus US 2020 / 0 254 562 A1 ist ferner ein Laserschweißverfahren bekannt, bei dem die Leistung eines fokussierten Mittelstrahls und die Leistung eines konzentrisch fokussierten Ringstrahls unabhängig voneinander anpasst werden. Dies ermöglicht eine kontrollierte und anhaltende Kontraktion der Schmelzkapillare und des Schmelzbades und verhindert so unerwünschte Risse.

DE 10 2019 006 282 A1 offenbart ein Verfahren zur Prozessbewertung beim Laserstrahlschweißen eines oberen Fügepartners mit einem unteren Fügepartner, wobei mittels optischer Kohärenztomografie Höheninformationen in einer sich durch das Laserstrahlschweißen bildenden Schmelzkapillare und/oder in einem Umgebungsbereich der Schmelzkapillare ausgewertet werden.

Aufgabe der Erfindung ist es, ein Remote-Laserschweißverfahren zur Herstellung mediendichter Schweißnähte an Überlappstößen bereitzustellen, das es ermöglicht, die Entstehung von Undichtigkeiten, die durch Endkraterfehlerstellen verursacht werden, zu vermeiden.

Diese Aufgabe wird durch ein Remote-Laserschweißverfahren zur Herstellung einer mediendichten Schweißverbindung mit den Merkmalen nach Anspruch 1 sowie die Laserbearbeitungsanlage nach Anspruch 6 gelöst. Ein auf dem Remote-Laserschweißverfahren aufbauendes Verfahren zur Herstellung eines mediendichten Bauteils beschreibt Anspruch 7; das dementsprechend hergestellte mediendichte Bauteil offenbart Anspruch 8. Zweckmäßige Weiterbildungen der Erfindung sind in den Ansprüchen 2 bis 5 aufgeführt.

Nach Maßgabe der Erfindung wird durch das Remote-Laserschweißverfahren eine mediendichte Schweißverbindung an einem aus einem Oberblech und einem Unterblech gebildeten Überlappstoß hergestellt. Das Remote-Laserschweißverfahren wird mittels einer Laserbearbeitungsanlage durchgeführt, die eine Scanner-Optik zur Ausrichtung und Fokussierung eines Laserstrahls aufweist. Bei Durchführung des Remote-Laserschweißens wird der Laser in grundsätzlich bekannter Weise mittels der Scanner-Optik auf das Oberblech gerichtet und an einem an der Oberfläche des Oberblechs ausgebildeten Laserspot fokussiert. Im Bereich des Laserspots bilden sich während des Schweißvorgangs ein Schmelzbad und eine vom Schmelzbad umgebene Schmelzkapillare, deren räumliche Ausdehnung durch Modifikation der Schweißparameter verändert werden kann.

Zur Herstellung der Schweißverbindung wird zunächst eine ununterbrochene Verbindungs-Einschweißnaht zwischen dem Oberblech und dem Unterblech durch zusatzwerkstofffreies Remote-Laserschweißen erzeugt. Die Einschweißtiefe der Verbindungs-Einschweißnaht, d. h., die Tiefe, bis zu der das Schmelzbad ausgebildet ist, wird durch Wahl geeigneter Schweißparameter so eingestellt bzw. gesteuert, dass die Verbindungs-Einschweißnaht auf der gesamten Nahtlänge in das Unterblech hineinragt, ohne dabei aber das Unterblech zu durchstoßen. Die Einschweißtiefe ist demnach - bei spaltfreiem Überlappstoß - größer als die Blechdicke des Oberblechs und kleiner als die Gesamtblechdicke aus dem Oberblech und dem Unterblech. Die geeigneten Schweißparameter sind - sofern diese nicht aus Tabellenwerken bekannt sind - in fachüblicher Weise durch Erprobungsschweißungen zu ermitteln. Die Einschweißtiefe ist vorzugsweise so gewählt, dass die Verbindungs-Einschweißnaht das gesamte Oberblech durchdringt und bis zu einer Tiefe von 40 % bis 90 % in das Unterblech hineinragt. Durch die Wahl geeigneter, aus dem Stand der Technik bekannter oder durch Erprobung ermittelter Schweißparameter kann die Verbindungs-Einschweißnaht frei von durchgehenden Schweißnahtfehlern, wie zum Beispiel Rissen oder Hohlräumen, erzeugt werden. Die Verbindungs-Einschweißnaht ist mithin verfahrensinhärent mediendicht ausgeführt bzw. ausführbar.

Im unmittelbaren Anschluss an die Fertigstellung der Verbindungs-Einschweißnaht wird - unterbrechungsfrei - eine Auslaufschweißnaht durch zusatzwerkstofffreies Remote-Laserschweißen erzeugt. Hierzu wird der Laserstrahl mittels der Scanner-Optik auf dem Oberblech entlang eines bereits erstarrten Abschnitts der Verbindungs-Einschweißnaht geführt; die Auslaufschweißnaht bildet sich innerhalb dieses Abschnitts der Verbindungs-Einschweißnaht. Während der Erzeugung der Auslaufschweißnaht wird die Einschweißtiefe sukzessiv reduziert; die Schmelzkapillare wird mithin in ihrer Tiefenausdehnung verkleinert. Die Abschaltung des Laserstrahls erfolgt erst, nachdem die Einschweißtiefe die Blechdicke des Oberblechs unterschritten hat. D. h., während der Bewegung des Laserspots zum Nahtende der Auslaufschweißnaht hin wird die Einschweißtiefe und desgleichen die Tiefe der Schmelzkapillare derartig reduziert, dass die Auslaufschweißnaht am Nahtende nicht aus der Unterseite des Oberblechs herausragt. Abgesehen von der Einstrahlseite des Laserstrahls, d. h. nahtoberseitig, umschließt die Verbindungs-Einschweißnaht die Auslaufschweißnaht.

Durch das erfindungsgemäße Remote-Laserschweißen wird erreicht, dass die am Prozessende notwendige Abschaltung des Lasers, die am jeweiligen Nahtende zur Bildung eines Endkraters führen kann, so gesteuert wird, dass der eventuell auftretende Endkrater oder die am Endkrater vorhandenen Endkraterrisse in einem Bereich lokalisiert werden, der die Mediendichtigkeit der Schweißverbindung nicht beeinträchtigt.

Hierdurch werden Schweißverbindungen bereitgestellt, die neben einer ausreichenden Festigkeit mediendicht ausgeführt sind. Die Schweißverbindungen genügen so auch den Anforderungen bei Dichtigkeitsprüfungen mit Helium, d. h., sie sind heliumdicht.

Zur sukzessiven Verminderung der Einschweißtiefe während der Erzeugung der Auslaufschweißnaht kann - gleichfalls sukzessiv - die Laserleistung vermindert (zum Beispiel in Form einer Leistungsrampe), die Schweißgeschwindigkeit erhöht (zum Beispiel in Form einer Geschwindigkeitsrampe) oder der Laserspot durch Defokussierung des Lasers vergrößert (zum Beispiel in Form einer Defokussierungsrampe) werden.

Erfindungsgemäß wird die Einschweißtiefe mittels einer Steuerungs- und Regelungseinheit der Laserbearbeitungsanlage auf Basis einer geometrischen Vermessung der durch den Laserstrahl im Schmelzgut sich bildendenden Schmelzkapillare geregelt. Die Laserbearbeitungsanlage verfügt zur Vermessung der Schmelzkapillare, insbesondere zu deren Tiefenvermessung, über eine geeignete Sensorikeinheit. Die geometrische Vermessung der Schmelzkapillare wird beispielsweise mittels optischer Kohärenztomografie (englisch optical coherence tomography, kurz OCT) bzw. unter Verwendung der entsprechenden OCT-Messtechnik durchgeführt.

Bevorzugt wird das vorgeschlagene Remote-Laserschweißverfahren zum Verbinden von Werkstücken aus Aluminium oder aus Aluminiumlegierung angewandt. Insbesondere eignet es sich zur Herstellung von Schweißverbindungen aus Aluminium-Magnesium-Legierungen oder Aluminium-Magnesium-Silicium-Legierungen, die aufgrund ihrer Heißrissanfälligkeit zur Bildung von Endkraterrissen neigen.

Die erfindungsgemäße Laserbearbeitungsanlage umfasst neben der Scanner-Optik und gegebenenfalls weiteren bekannten Komponenten, wie zum Beispiel mono- oder multiachsialen Verfahr- oder Manipulatorvorrichtungen, eine Steuerungs- und Regelungseinheit, die zur Durchführung des Remote-Laserschweißverfahrens eingerichtet ist. D. h., die Steuerungs- und Regelungseinheit besitzt zum Beispiel Datenbankeinheiten, in denen die Prozessdaten, die Verfahrensschritte und deren Ablauf hinterlegt sind, und mindestens einen Prozessor, mittels dem die Verfahrensschritte, einschließlich der Ansteuerung der anderen Komponenten der Laserbearbeitungsanlage, ausführbar sind.

Gemäß dem Verfahren zur Herstellung eines mediendichten Bauteils, das aus mehreren, durch Schweißverbindungen miteinander verbundenen Einzelbauelementen gefügt ist, werden die Schweißverbindungen unter Einsatz des beschriebenen Remote-Laserschweißverfahrens erzeugt, wobei am Bauteil mindestens eine endlose, geschlossene Dichtnaht aus einer oder mehreren der Verbindungs-Einschweißnähte gebildet wird. Unter der endlosen, geschlossenen Dichtnaht wird vorliegend ein geschlossener Nahtverlauf verstanden, der keine freien Nahtenden aufweist. Die Auslaufschweißnaht kann innerhalb eines Abschnitts der Dichtnaht, der gleichzeitig ein Abschnitt der Verbindungs-Einschweißnaht ist, erzeugt werden.

Gemäß einer Ausgestaltung dieses Verfahrens zur Herstellung eines mediendichten Bauteils wird mindestens eine von der Dichtnaht abzweigende Anschlussnaht erzeugt. Die Anschlussnaht wird vorzugsweise als Verbindungs-Einschweißnaht hergestellt, wobei die Auslaufschweißnaht innerhalb eines Abschnitts der Anschlussnaht ausgebildet wird. Alternativ kann die Anschlussnaht ausschließlich als Auslaufschweißnaht hergestellt werden. Der Vorteil der Ausgestaltung mit Anschlussnaht besteht darin, dass das den Endkrater eventuell aufweisende Nahtende der Auslaufschweißnaht in einem Bauteilbereich positioniert werden kann, der im Fall von Schweißfehlern die Mediendichtigkeit des Bauteils keinesfalls beeinträchtigt, d. h. in Bezug auf Undichtigkeiten grundsätzlich als unkritisch anzusehen ist. Hierzu wird die Anschlussnaht in einem entsprechenden Bauteilbereich positioniert.

Das mediendichte Bauteil umfasst einen ein fluides Medium aufnehmenden Innenraum sowie eine aus mehreren wändebildenden Einzelbauelementen gefügte Einhausung, die den Innenraum umgibt und ihn von der Umgebung trennt. Das mediendichte Bauteil ist erfindungsgemäß nach dem vorstehend beschriebenen Verfahren hergestellt.

Die Erfindung ist nachfolgend anhand von Ausführungsbeispielen und mit Bezug auf die schematischen Zeichnungen näher erläutert, wobei gleiche oder ähnliche Merkmale mit gleichen Bezugszeichen versehen sind; dazu zeigen:
- Fig. 1:: die Verbindungs-Einschweißnaht an einem Überlappstoß im Querschnitt der Verbindungs-Einschweißnaht,
- Fig. 2:: die Auslaufschweißnaht innerhalb der Verbindungs-Einschweißnaht an einem Überlappstoß im Querschnitt der Auslaufschweißnaht an deren Nahtende,
- Fig. 3:: die Verbindungs-Einschweißnaht an einem Überlappstoß im Längsschnitt der Verbindungs-Einschweißnaht,
- Fig. 4:: die Auslaufschweißnaht innerhalb der Verbindungs-Einschweißnaht an einem Überlappstoß im Längsschnitt der Auslaufschweißnaht,
- Fig. 5:: ein Bauteil aus zwei Einzelbauelementen mit Auslaufschweißnaht innerhalb der Dichtnaht,
- Fig. 6:: ein Bauteil aus zwei Einzelbauelementen mit Auslaufschweißnaht innerhalb der Anschlussnaht, und
- Fig. 7:: ein Bauteil aus zwei Einzelbauelementen mit Auslaufschweißnaht innerhalb einer der Anschlussnähte.

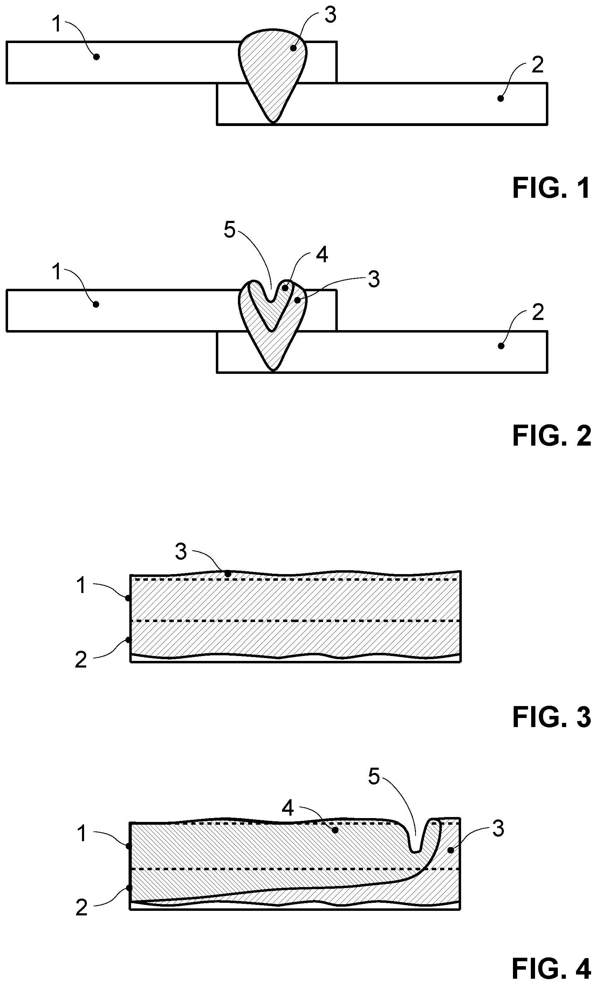

Die Herstellung und Ausbildung der Schweißverbindung bei Anwendung des erfindungsgemäßen Remote-Laserschweißverfahrens ist in den Fig. 1 bis 4 in unterschiedlichen Schnittlagen wiedergegeben. Das Oberblech 1 und das Unterblech 2 werden zunächst - siehe Fig. 1 und Fig. 3 - mittels der Verbindungs-Einschweißnaht 3 verbunden, wobei die Einschweißtiefe nahezu bis zur Unterseite des Unterblechs 2 reicht; die Unterseite des Unterblechs 2 wird während des Laserschweißprozesses nicht durchdrungen. Die Verbindungs-Einschweißnaht 3 wird mit grundsätzlich bekannten oder optimierten Schweißparametern erzeugt; die Verbindungs-Einschweißnaht 3 bildet so eine qualitativ hochwertige Schweißverbindung ohne durchgehende Schweißfehler, wie zum Beispiel Poren, Lunker, andere Hohlräume oder Risse. Die Verbindungs-Einschweißnaht 3 ist demnach verfahrensinhärent als mediendichte Schweißnaht ausgebildet.

Die Auslaufschweißnaht 4 wird - siehe hierzu Fig. 2 und Fig. 4 - innerhalb eines bereits erstarrten Abschnitts der Verbindungs-Einschweißnaht 3 erzeugt. Die Einschweißtiefe wird sukzessiv reduziert, sodass die Auslaufschweißnaht 4 an ihrem Nahtende eine Einschweißtiefe aufweist, die kleiner ist als die Blechdicke des Oberblechs 1, d. h., die Auslaufschweißnaht 4 besitzt am Nahtende eine Einschweißtiefe, die nicht in den Bereich des Unterblechs 2 bzw. des korrespondierenden Bereichs in der Verbindungs-Einschweißnaht 3 reicht. Der Endkrater 5, dessen Bildung am Nahtende der Auslaufschweißnaht 4 verfahrensbedingt nicht ausgeschlossen werden kann, erreicht somit maximal eine der Blechdicke des Oberblechs 1 entsprechende Tiefe. Eine Durchdringung des Oberblechs 1 und somit die Bildung von durchtretenden Hohlräumen werden hierdurch vermieden. Die notwendige Abschaltung des Laserstrahls nach Abschluss des Laserstrahlschweißens kann somit durch Herstellung der Auslaufschweißnaht 4 vorgenommen werden. Die durch die Verbindungs-Einschweißnaht 3 erzeugte mediendichte Schweißverbindung bleibt trotz einer eventuellen Endkraterbildung erhalten. Durch Verlagerung des Endbereichs der Auslaufschweißnaht 4 in die Zone des Oberblechs 1 können auch andere eventuell auftretende Schweißfehler, wie zum Beispiel Endkraterrisse, toleriert werden.

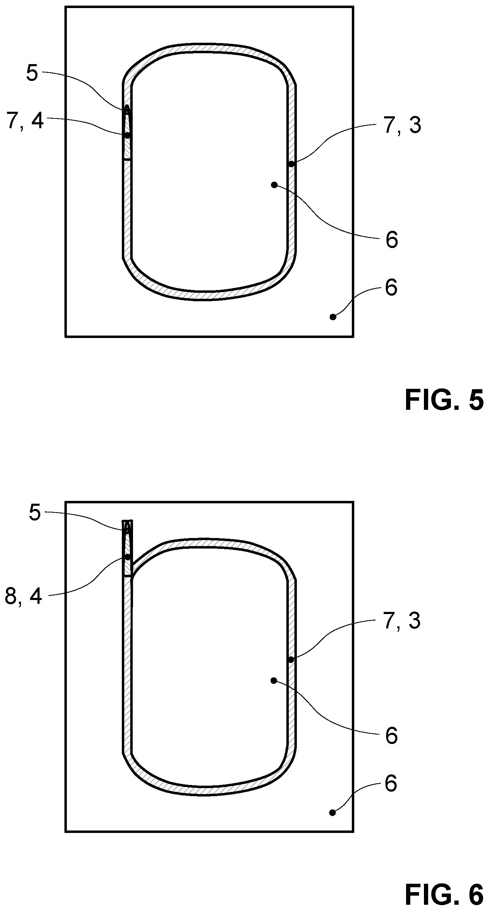

Die in den Fig. 5 bis 7 vereinfacht dargestellten Bauteile umfassen jeweils zwei Einzelbauelemente 6, die mittels der Verbindungs-Einschweißnaht 3 durch Remote-Laserschweißen verbunden wurden. Die zwei Einzelbauelemente 6 sind im Bereich der Verbindungskontur als Blech ausgeformt und überlappen einander. In dem so entstandenen Überlappstoß bildet eines der beiden Einzelbauelemente 6 das Oberblech 1 und das andere der beiden Einzelbauelemente 6 das Unterblech 2. Die beiden Einzelbauelemente 6 sind mit der aus der Verbindungs-Einschweißnaht 3 gebildeten Dichtnaht 7 verbunden. Diese Dichtnaht 7 ist stets eine endlose, geschlossene Naht, d. h, sie besitzt keine freien Nahtenden.

Die Auslaufschweißnaht 4 ist im Ausführungsbeispiel gemäß Fig. 5 direkt innerhalb der Dichtnaht 7 verortet, d. h., sie liegt innerhalb eines Abschnitts der Dichtnaht 7 bzw. der Verbindungs-Einschweißnaht 3.

Im Ausführungsbeispiel gemäß der Fig. 6 befindet sich die Auslaufschweißnaht 4 in der Anschlussnaht 8, d. h. außerhalb der Dichtnaht 7. Die Anschlussnaht 8 und die Dichtnaht 7 sind beide als Verbindungs-Einschweißnähte 3 ausgebildet, d. h., sie können in einem ununterbrochenen Schweißvorgang erzeugt werden. Im Ausführungsbeispiel nach Fig. 6 kann der Schweißvorgang beispielsweise mit der Anschlussnaht 8 begonnen, dann der geschlossene Nahtverlauf der Dichtnaht 7 erzeugt und schließlich die Auslaufschweißnaht 4 direkt im Anschluss an die Herstellung der Dichtnaht 7 innerhalb der Anschlussnaht 8 hergestellt werden.

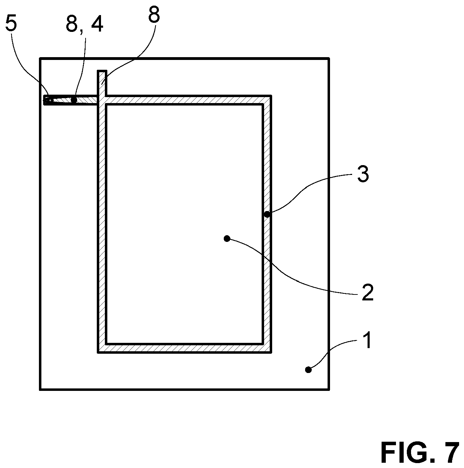

Die Auslaufschweißnaht 4 im Ausführungsbeispiel nach Fig. 7 liegt im Bereich einer der beiden Anschlussnähte 8. Im Ausführungsbeispiel nach Fig. 7 ist die Schweißfolge so gewählt, dass ein Abschnitt der Verbindungs-Einschweißnaht 3 einen weiteren, bereits erstarrten Abschnitt der Verbindungs-Einschweißnaht 3 beim Schließen der Dichtnaht 7 kreuzt.

Die Auslaufschweißnaht 4 wird bei Einbringung innerhalb einer als Verbindungs-Einschweißnaht 3 ausgeführten Anschlussnaht 8 oder bei Ausführung als Anschlussnaht 8 vorzugsweise so hergestellt, dass das den Endkrater 5 eventuell aufweisende Nahtende der Auslaufschweißnaht 4 in einem Bauteilbereich liegt, der im Fall von Fehlstellen die Mediendichtigkeit des Bauteils nicht beeinträchtigt. Durch entsprechende Positionierung der Anschlussnaht 8 wird dies inhärent erreicht.

### Bezugszeichenliste

- 1: Oberblech
- 2: Unterblech
- 3: Verbindungs-Einschweißnaht
- 4: Auslaufschweißnaht
- 5: Endkrater
- 6: Einzelbauelement
- 7: Dichtnaht
- 8: Anschlussnaht

## Patentansprüche

1. Remote-Laserschweißverfahren zur Herstellung einer mediendichten Schweißverbindung an einem aus einem Oberblech (1) und einem Unterblech (2) gebildeten Überlappstoß, durchgeführt mittels einer Laserbearbeitungsanlage, die eine Scanner-Optik zur Ausrichtung und Fokussierung eines Laserstrahls aufweist, wobei der Laserstrahl bei Durchführung des Remote-Laserschweißens mittels der Scanner-Optik auf das Oberblech (1) gerichtet und an einem an der Oberfläche des Oberblechs (1) ausgebildeten Laserspot fokussiert wird, wobei zur Ausbildung der Schweißverbindung zunächst eine ununterbrochene Verbindungs-Einschweißnaht (3) zwischen dem Oberblech (1) und dem Unterblech (2) durch zusatzwerkstofffreies Remote-Laserschweißen erzeugt wird, und wobei die Einschweißtiefe der Verbindungs-Einschweißnaht (3) so gesteuert wird, dass die Verbindungs-Einschweißnaht (3) auf der gesamten Nahtlänge in das Unterblech (2) hineinragt, ohne das Unterblech (2) zu durchstoßen, **dadurch gekennzeichnet, dass** unterbrechungsfrei, im unmittelbaren Anschluss an die Fertigstellung der Verbindungs-Einschweißnaht (3) eine Auslaufschweißnaht (4) durch zusatzwerkstofffreies Remote-Laserschweißen erzeugt wird, wobei der Laserstrahl zu Erzeugung der Auslaufschweißnaht (4) mittels der Scanner-Optik auf dem Oberblech (1) entlang eines bereits erstarrten Abschnitts der Verbindungs-Einschweißnaht (3) unter Ausbildung der Auslaufschweißnaht (4) innerhalb dieses Abschnitts der Verbindungs-Einschweißnaht (3) geführt wird, wobei die Einschweißtiefe während der Erzeugung der Auslaufschweißnaht (4) sukzessiv reduziert wird, und wobei die Abschaltung des Laserstrahls erst erfolgt, wenn die Einschweißtiefe die Blechdicke des Oberblechs (1) unterschritten hat, und wobei die Einschweißtiefe mittels einer Steuerungs- und Regelungseinheit der Laserbearbeitungsanlage auf Basis einer geometrischen Vermessung der durch den Laserstrahl im Schmelzgut sich bildendenden Schmelzkapillare geregelt wird.

2. Remote-Laserschweißverfahren nach Anspruch 1, **dadurch gekennzeichnet, dass** die Einschweißtiefe während der Erzeugung der Auslaufschweißnaht (4) sukzessiv durch eine Verminderung der Laserleistung, durch eine Erhöhung der Schweißgeschwindigkeit und/oder durch eine Vergrößerung des Laserspots reduziert wird.

3. Remote-Laserschweißverfahren nach Anspruch 1 oder 2, **dadurch gekennzeichnet, dass** die geometrische Vermessung der Schmelzkapillare mittels optischer Kohärenztomografie durchgeführt wird.

4. Remote-Laserschweißverfahren nach einem der Ansprüche 1 bis 3, **dadurch gekennzeichnet, dass** als Werkstoff des Oberblechs (1) und des Unterblechs (2) Aluminium oder eine Aluminiumlegierung verwendet wird.

5. Remote-Laserschweißverfahren nach Anspruch 4, **dadurch gekennzeichnet, dass** die Aluminiumlegierung eine Aluminium-Magnesium-Legierung oder eine Aluminium-Magnesium-Silicium-Legierung ist.

6. Laserbearbeitungsanlage, umfassend eine Scanner-Optik zur Ausrichtung und Fokussierung eines Laserstrahls, **dadurch gekennzeichnet, dass** die Laserbearbeitungsanlage eine zur Durchführung des Remote-Laserschweißverfahrens nach einem der Ansprüche 1 bis 3 eingerichtete Steuerungs- und Regelungseinheit aufweist.

7. Verfahren zur Herstellung eines mediendichten Bauteils aus mehreren, durch Schweißverbindungen miteinander verbundenen Einzelbauelementen (6), **dadurch gekennzeichnet, dass** die Schweißverbindungen mittels eines Remote-Laserschweißverfahrens nach einem der Ansprüche 1 bis 5 erzeugt werden, wobei am Bauteil mindestens eine endlose, geschlossene Dichtnaht (7) aus einer oder mehreren der Verbindungs-Einschweißnähte (3) gebildet wird.

8. Mediendichtes Bauteil, das einen ein fluides Medium aufnehmenden Innenraum sowie eine aus mehreren wändebildenden Einzelbauelementen (6) gefügte Einhausung des Innenraums aufweist, wobei die Einhausung den Innenraum von der Umgebung trennt, **dadurch gekennzeichnet, dass** die Einhausung nach einem Verfahren nach Anspruch 7 hergestellt ist.
